# EUROPEAN PATENT APPLICATION

(11) **EP 4 357 150 A1**
(43) Date of publication of application: **24.04.2024**
(21) Application number: 22202837.5
(22) Date of filing: 20.10.2022
(51) Int. Cl.: B60B 5/02, B29C 45/14, B60B 3/02, B60B 3/10, B60B 21/02

(54) **WHEEL RIM, PROCESS AND SYSTEM FOR MANUFACTURING A WHEEL RIM**

(71) Applicant: Cercle Des Plasturgistes, 44024 Nantes Cedex 1 (FR)
(72) Inventor: Glaumot, Olivier, 91470 Forges les Bains (FR); Gazonnet, Guillaume, 78124 Mareil sur Mauldre (FR)
(74) Representative: Touroude & Associates

(57) **Abstract**

The invention concerns a process for manufacturing a wheel rim (1), comprising a rim body (2) and a rim hub (3) designed for fastening the rim (1) to a wheel hub, wherein the process comprises the following steps : a) manufacturing the rim hub (3), including binding portions (33) for receiving material of the rim body (2) during overmolding; then b) manufacturing the rim body (2) by injection molding, including operations of overmolding the body (2) over the hub (3) and forming at least one hollow channel (24) in the body (2), in a same mold and in the same injection cycle. The invention also concerns a wheel rim (1) and a system for manufacturing a wheel rim (1).

## Description

### TECHNICAL FIELD OF THE INVENTION

The invention concerns a process for manufacturing a wheel rim, comprising a rim body and a rim hub. The invention also concerns a wheel rim itself. The invention also concerns a system for manufacturing a wheel rim.

### BACKGROUND OF THE INVENTION

Composite wheel rims are known from the prior art, for example EP2748011B1, EP2988952B1 or EP3427973A1. A central metal insert is combined to a thermoplastic rim body, by overmolding or other techniques.

### SUMMARY OF THE INVENTION

The aim of the invention is to provide an improved process for manufacturing a wheel rim.

To this end, the invention concerns a process for manufacturing a wheel rim, comprising a rim body and a rim hub designed for fastening the wheel rim to a wheel hub, wherein the process comprises the following steps :
a) manufacturing the rim hub, including binding portions for receiving material of the rim body during overmolding ; then
b) manufacturing the rim body by injection molding, including operations of overmolding the body over the hub and forming a hollow channel in the body, in a same mold and in a same injection cycle.

Thanks to the invention, the wheel rim is made with high mechanical characteristics, while limiting the production costs and the investments.

According to further aspects which are advantageous but not compulsory, the invention may incorporate one or several of the following features:
- The hollow channel is made by fluid-assisted injection molding.
- The hollow channel is partly annular, i.e. it extends around the central axis along at least part of an annular trajectory.
- The hollow channel is radially peripheral in the rim body, i.e. located at the periphery of the rim body along the radial direction.
- The hollow channel is axially lateral in the rim body, i.e. located on a side along the axial direction
- The hollow channel extends over at least 300 degrees around a central axis of the wheel rim.
- The hollow channel extends over at least 300 degrees around a central axis of the wheel rim.
- The hollow channel is closed in radial planes, except at the fluid injector location.
- The rim body comprises a vent designed for receiving a functional device, for example an inflation valve or a sensor.
- The vent is oriented toward a tire reception area of the wheel rim.
- The rim hub comprises pass-trough holes for fastening the wheel rim to a wheel hub and other pass-trough holes for receiving material of the rim body from overmolding.
- The pass-trough holes are distributed along different diameters of the wheel hub.
- The binding portions comprises pass-trough holes.
- The binding portions comprises first pass-trough holes distributed along a first diameter and second pass-trough holes distributed along a second diameter of the wheel hub.
- The binding portions comprises first pass-trough holes having a first diameter and second pass-trough holes having a second diameter.
- The binding portions comprises radial protrusions with concave trenches.
- The binding portions comprises cavities formed on at least one side of the wheel rim.
- The wheel rim is made of only two components after injection molding, the two components being the rim body and the rim hub.
- The rim hub is made of a single part.
- The rim hub is made of a several parts.
- The rim body is made of thermoplastic material.
- The rim hub is made of metal.
- The rim hub is made of thermoset material.
- The rim body includes several hollow channels.
- The rim body includes two hollow channels located on either sides.
- The rim body includes two hollow channels located on a same annular path.
- Each rim channels extends over at least 100 degrees around a central axis of the wheel rim.
- The rim body includes at least one metal wire for improving its mechanical strength.

The invention also concerns a wheel rim, comprising a rim body and a rim hub designed for fastening the wheel rim to a wheel hub, wherein the rim hub includes binding portions receiving material of the rim body from overmolding, and wherein the rim body includes at least one hollow channel.

The invention also concerns a system for manufacturing a wheel rim, comprising a rim body and a rim hub designed for fastening the wheel rim to a wheel hub, wherein the system is designed for manufacturing the rim body by injection molding, including operations of overmolding the body over the hub and forming at least one hollow channel in the body in the same mold and in the same injection cycle.

### BRIEF DESCRIPTION OF THE DRAWINGS

The invention will now be explained in correspondence with the annexed figures, and as an illustrative example, without restricting the object of the invention. In the annexed figures:
- Figure 1 is a perspective view of a wheel rim according to the invention, comprising a rim body and a rim hub.
- Figure 2 is a perspective view similar to figure 1, with the rim body partially represented, to better see the hollow channel and the rim hub.
- Figure 3 is a front view of the wheel rim.
- Figure 4 is a front view similar to figure 3, without the rim hub and the fastening elements.
- Figure 5 is a partial sectional view of the rim body, showing a hollow channel formed in the rim body.
- Figure 6 is a partial sectional view of the rim body, showing a vent formed in the rim body.
- Figure 7 is a perspective view of the rim hub.
- Figure 8 is a front view of the rim hub.
- Figure 9 is a sectional view of the wheel rim, showing the overmolding of the hub by the rim.
- Figure 10 is a view similar to figure 5, showing a second embodiment of a rim body, provided with two hollow channels.
- Figure 11 is a view similar to figure 5, showing a third embodiment of a rim body, provided with a metal wire.
- Figure 12 is a front view of the injection system, including a mold comprising movable parts, represented closed on the left and open on the right.

### DETAILED DESCRIPTION OF SOME EMBODIMENTS

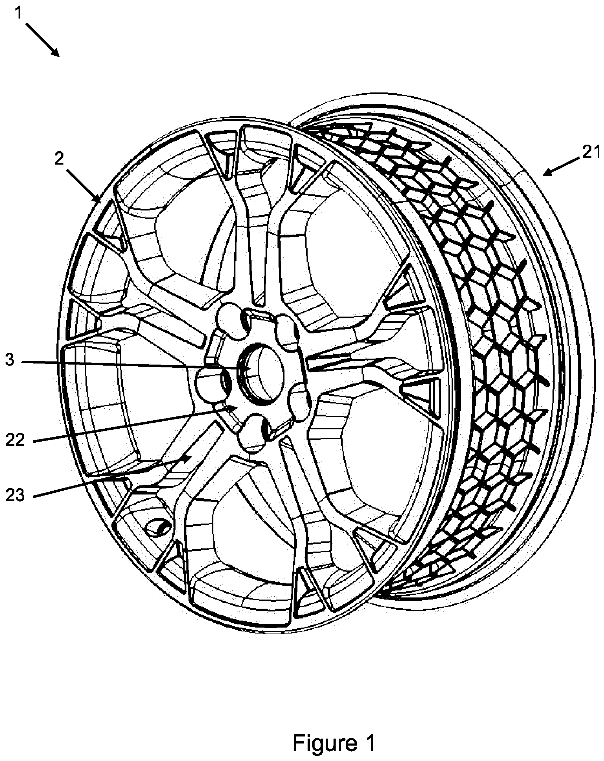

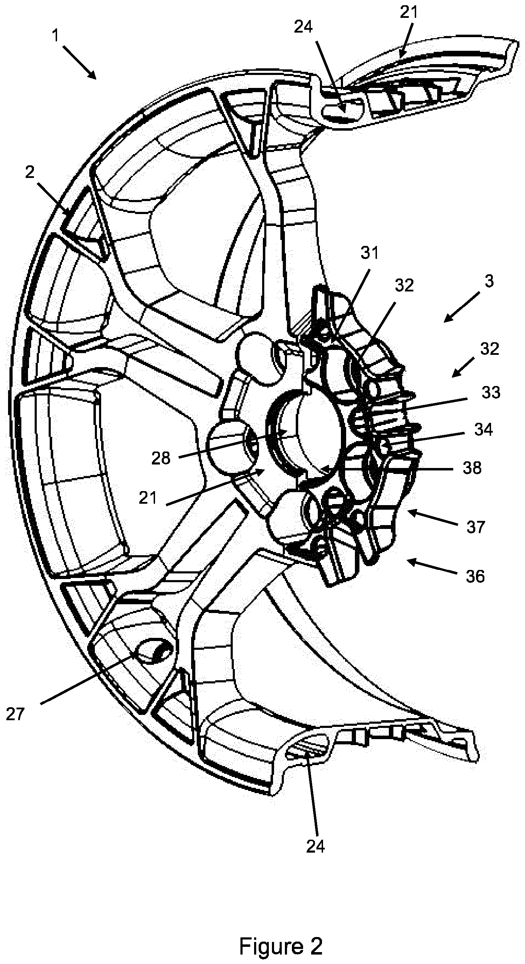

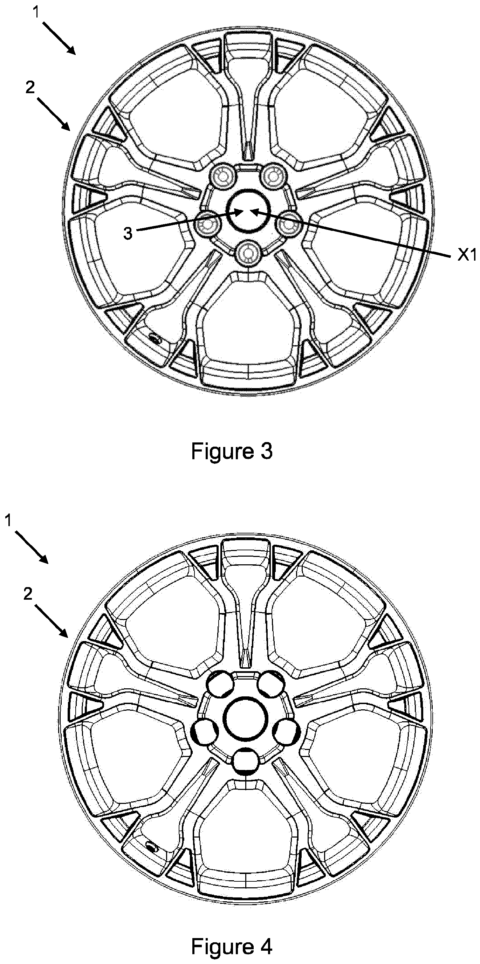

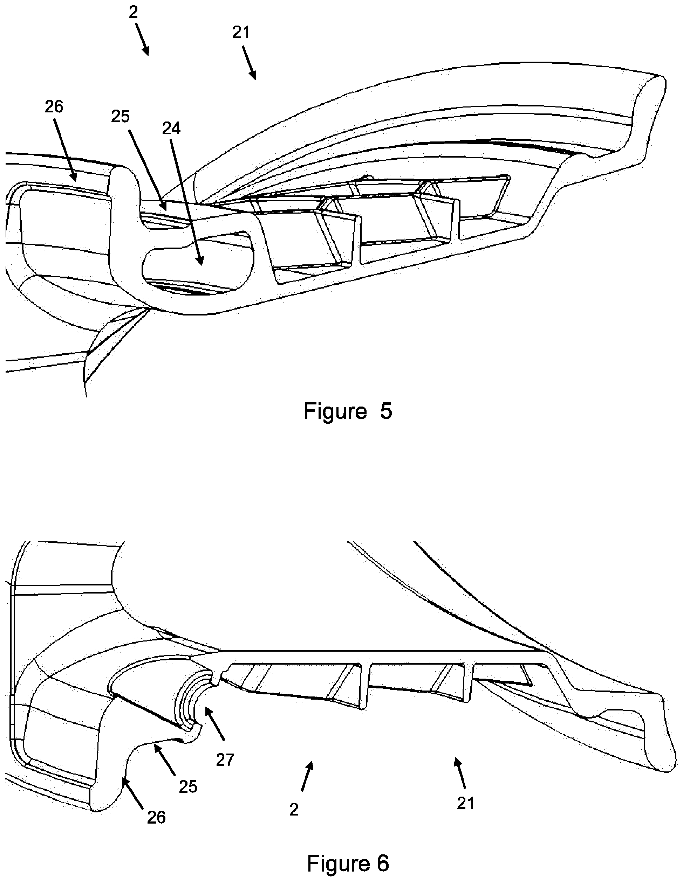

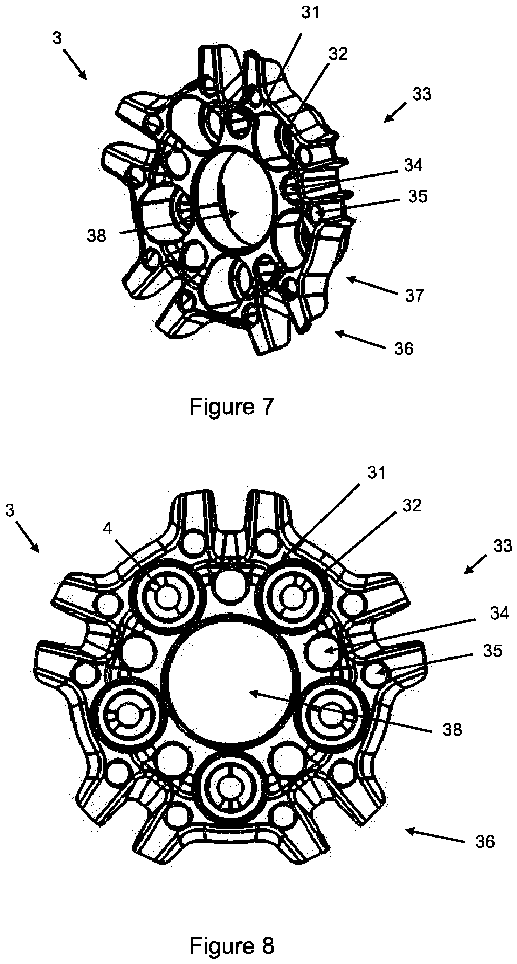

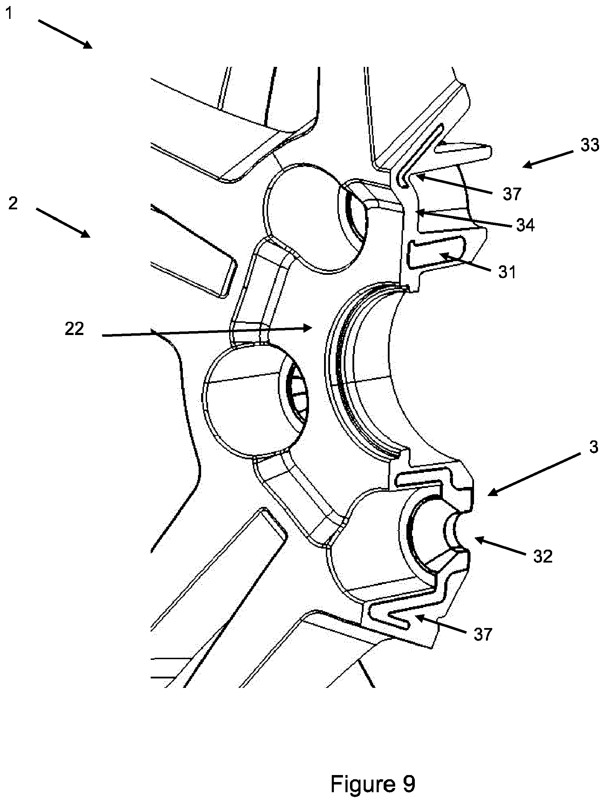

Figures 1 to 9 show a wheel rim (1), comprising a rim body (2) and a rim hub (3). The wheel rim (1) is made of two distinct main components, which are the rim body (2) and the rim hub (3). Fastening elements can be used for fastening the rim (1) to a wheel hub (not shown). The wheel rim (1), the rim body (2) and the rim hub (2) are centered on a central axis (X1).

The rim body (2) comprises a peripheral portion (21) designed for receiving a tire, a central portion (22) designed for receiving the hub (3) and for fastening to the wheel hub, and several rim spokes (23) extending between the peripheral portion (21) and the central portion (22).

The peripheral portion (21) is designed for receiving a tire. The peripheral portion (21) has a central section with honeycomb shape and two borders, each with an axial section (25) and a radial section (26) designed for receiving the tire in bearing contact.

The central portion (22) comprises a central through-hole (28), aligned with a central through-hole (38) of the hub, for assembly with the wheel hub.

The spokes (23) are five in the represented example. Each spoke (23) comprises two larger lateral sections providing mechanical resistance to the rim body (2) and a thinner central section for lightening the rim body (2).

The rim body (2) further comprises a hollow channel (24) made by fluid-assisted injection molding, as described in more detail later. The channel (24) brings the advantages of lightening the rim body (2) and reducing the cooling time of the rim body (2), thus increasing the manufacturing speed of the rim (1).The channel (24) is annular, extending around the central axis (X1). The channel (24) is hollow, closed in radial planes including the central axis (X1). The channel (24) is radially peripheral in the rim body (2), that is formed near the peripheral portion (21). The hollow channel (24) is axially lateral in the rim body (2), formed close to an axial section (25), on a lateral side of the peripheral section (21).

The rim body (2) comprises a vent (27) designed for receiving a functional device, for example an inflation valve or a sensor. The vent (27) is oriented toward the tire reception area of the wheel rim (1), near the peripheral portion (21). The vent (27) is located in the continuity of the annular path of the channel (24), where the channel (24) is not present. In other words, the channel (24) extends all around the central axis (X1) of the wheel rim (1), except at a section where the vent (27) is located.

The rim body (2) can be made of thermoplastic material, for example polyamide, polypropylene, polybutylene terephthalate, etc, preferably reinforced with glass fiber, carbon fiber, or any other synthetic or mineral material.

The rim hub (3) is designed as an insert to be overmolded within the rim body (1) and to be fastened to a wheel hub (not shown). The rim hub (3) can be made of metallic material, for example aluminum and magnesium alloys, or thermoset material. The material is chosen to withstand the tightening torque of each rim fastener during mounting, as well as the acceleration and braking forces during operation of the vehicle.

The rim hub (3) comprises a main disc (31) provided with pass-through holes (32, 34, 35) directed parallel to the central axis (X1). More precisely, the rim hub (3) comprises holes (32) for fastening the wheel rim (1) to a wheel hub and other holes (34, 35) for receiving material of the rim body (2) from overmolding. The holes (32, 34, 35) are distributed along different diameters of the wheel hub (3).

The rim hub (3) is provided with different binding portions (33), in order to facilitate the mechanical binding of the body (2) and hub (3) together, by overmolding of the rim hub (3) during the material injection phase.

The binding portions (33) comprises the pass-trough holes (34, 35), more precisely first holes (34) distributed along a first diameter and second holes (35) distributed along a second diameter of the wheel hub (3). The holes (34) have a larger diameter than the holes (35). The binding portions (33) comprises radial protrusions (36) provided with concave trenches and extending away from the central axis (X1) inside the spokes (23). More precisely, the hub (3) is provided with five pairs of protrusions (36), each extending inside a large lateral section of the spokes (23). The binding portions (33) comprises cavities (37) formed on the back side of the wheel rim (1).

During injection, material of the injected body (2) is received in the binding portions (33), passing from one side to the other and thus form bridges of material inside the holes (34, 35) of the hub (3). Said hub (3) is thus completely overmolded, except for the surfaces located around the holes (32) designed for receiving the fastening elements.

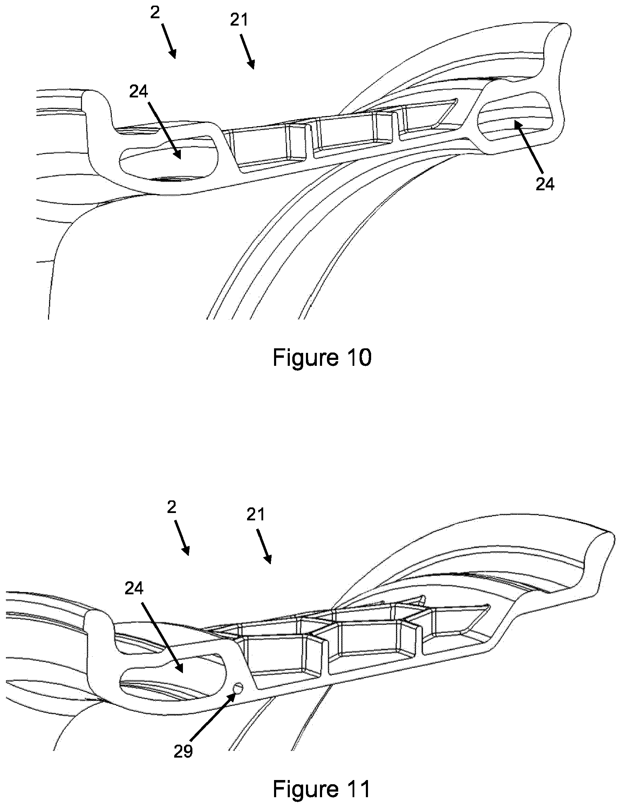

Figure 11 shows another embodiment of a rim body (2), including two hollow channels (24) located on the lateral sides. Alternatively, the rim body (2) may include more than two channels (24). Also alternatively, the channels (24) may have various shapes and/or locations. For example, two channels (24) may be provided along a same annular path, on a same circle.

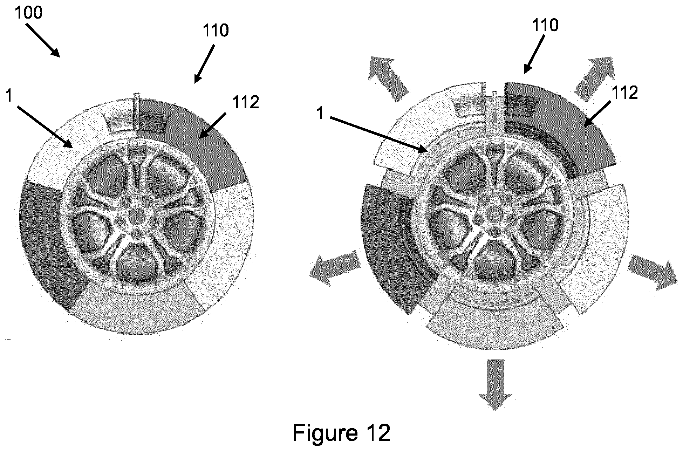

Figure 12 shows another embodiment of a rim body (2), including a metal wire (29) extending around the central axis (X1) along part of an annular path, next to the hollow channel (24). The wire (29) is integrated to the body (2) by overmolding. The wire (29) improves the mechanical strength of the rim body (2). Alternatively, the rim body (2) may include several wires (29). Also alternatively, the wires (29) may have various profiles and/or locations.

The manufacturing process of the wheel rim (1) is detailed here-after. The description is made in reference to one hollow channel (24) for simplification purpose, being understood that the rim (1) may include several channels (24).

Step a) is performed in a first machine (not shown). The rim hub (3) is produced by injection molding to obtain optimum material characteristics, and thus withstand the tightening torques during assembly of the rim (1) on the vehicle. The forces induced by these torques are transmitted entirely by the hub (3) without going through any plastic portion from the body (2).

Step b) is performed in a second machine (100). The rim (1) is produced by molding the body (2) over the hub (3), based on 2 combined plastic injection techniques:
- The technique of overmolding of the rim hub (3) by the thermoplastic material of the body (2), during the plastic injection of the body (2).
- The technique of fluid-assisted injection for the formation of a hollow channel (24) inside the body (2), also during the plastic injection cycle.

The wheel rim (1) is made of only two components (2, 3) after injection molding, the two components (2, 3) being the rim body (2) and the rim hub (3).

Figure 12 shows certain mold elements of the system (100) designed for manufacturing the wheel rim (1), more precisely for performing step b). The mold (110) is made of different movable parts (112).

Step b) is described in more details here-after:
- Opening of the mold (110) by moving the parts (112).
- Positioning of the hub (3) in the mold (110) by the gripping robot (not shown). In order to best position said hub (3), the robot indexes itself thanks to guiding means provided for this purpose in holes in the mold (110). The hub (3) can also held by magnetization (for ferrous materials) or by suction by venturi (for non-ferrous materials).
- Once the hub has been positioned and maintained, the mold (110) is closed.
- Start of the material injection phase:
   -- Complete filling of the mold cavity by the thermoplastic material.
   -- Material holding pressure phase
- Start of the fluid injection phase:
   -- Opening of the fluid injection system (gas or water).
   - Discharge of the still viscous material from the channel (24).
   -- Once the channel (24) has been hollowed out, maintaining the pressure of the fluid (between 1 and 700 bars) in order to finalize the holding pressure of the material and guarantee an optimum geometry of the rim (1).
   -- Stopping the fluid injection device, then degassing it when a gaseous fluid is used or draining the fluid if a liquid fluid is used.
- Keeping the mold (110) closed during cooling of the rim (1).
- Opening of the mold (110).
- Removal of the rim (1) by the gripping robot.
- Positioning of the hub (3) for the next piece by the gripping robot.
- Closure of the mold (110) and launch of a new cycle.

The fluid-assisted injection process is described here-after. The principle of fluid-assisted injection is a process that has been known since the end of the 1970s. It aims to completely fill the mold cavity of the part to be molded, where it includes a large and continuous section of material at one or several places of this part, then to empty the interior of a channel using a high pressure fluid injection.

On said rim (1), the channel (24) is located at the periphery (21) of the rim body (2) over almost all of its circumference and positioned on the outside thereof. This channel (24), if it were to remain full, would drastically increase the cooling time of the rim (1), making its industrial feasibility prohibitive. The process therefore makes it possible, through the use of a fluid (gas or water), to push back the still viscous material inside said channel (24). The cooling of the material takes place from the wall in contact with the mold (110) towards the heart of the channel (24). Depending on the material used, a sufficiently rigid wall forms after a few seconds, which allows the fluid to push back only the material inside the newly created "rigid profile".

Other non-shown embodiments can be implemented within the scope of the invention. In particular, the wheel rim (1) can have different numbers of hollow channels (24), with various locations and shapes.

In addition, technical features of the different embodiments can be, in whole or part, combined with each other.

Thus, the wheel rim (1), the system (100) and the manufacturing process can be adapted to the specific requirements of the application.

## Claims

1. Process for manufacturing a wheel rim (1), comprising a rim body (2) and a rim hub (3) designed for fastening the wheel rim (1) to a wheel hub, wherein the process comprises the following steps :
a) manufacturing the rim hub (3), including binding portions (33) for receiving material of the rim body (2) during overmolding; then
b) manufacturing the rim body (2) by injection molding, including operations of overmolding the body (2) over the hub (3) and forming at least one hollow channel (24) in the body (2), in a same mold (110) and in a same injection cycle.

2. Process according to claim 1, wherein the hollow channel (24) is made by fluid-assisted injection molding.

3. Process according to any one of the previous claims, wherein the hollow channel (24) is at least partly annular.

4. Process according to any one of the previous claims, wherein the hollow channel (24) is radially peripheral in the rim body (2).

5. Process according to any one of the previous claims, wherein the hollow channel (24) is axially lateral in the rim body (2).

6. Process according to any one of the previous claims, wherein the hollow channel (24) extends over at least 300 degrees around a central axis (X1) of the wheel rim (1).

7. Process according to any one of the previous claims, wherein the rim body (2) comprises a vent (27) designed for receiving a functional device, for example an inflation valve or a sensor.

8. Process according to any one of the previous claims, wherein the rim body (2) includes at least one metal wire (29) improving its mechanical strength.

9. Process according to any one of the previous claims, wherein the rim hub (3) comprises pass-through holes (32) for fastening the wheel rim (1) to a wheel hub and other pass-through holes (34, 35) for receiving material of the rim body (2) from overmolding.

10. Process according to any one of the previous claims, wherein the binding portions (33) comprises radial protrusions (36) with concave trenches.

11. Process according to any one of the previous claims, wherein the binding portions (33) comprises cavities (37) formed on at least one side of the wheel rim (1).

12. Process according to any one of the previous claims, wherein the wheel rim (1) is made of only two components (2, 3) after injection molding, the two components (2, 3) being the rim body (2) and the rim hub (3).

13. Process according to any one of the previous claims, wherein the rim body (2) includes two hollow channels (24).

14. Wheel rim (1), comprising a rim body (2) and a rim hub (3) designed for fastening the rim (1) to a wheel hub, wherein the rim hub (3) includes binding portions (33) receiving material of the rim body (2) from overmolding, and wherein the rim body (2) includes at least one hollow channel (24).

15. System (100) for manufacturing a wheel rim (1), comprising a rim body (2) and a rim hub (3) designed for fastening the wheel rim (1) to a wheel hub, wherein the system is designed for manufacturing the rim body (2) by injection molding, including operations of overmolding the body (2) over the hub (3) and forming at least one hollow channel (24) in the body (2) in the same mold (110) and in the same injection cycle.
